**Europäisches Patentamt**

**European Patent Office**

**Office européen des brevets**

(19)

(11) Veröffentlichungsnummer: **0 075 108**
A2

# EUROPÄISCHE PATENTANMELDUNG

(12)

(21) Anmeldenummer: **82107360.8**

(22) Anmeldetag: **13.08.82**

(51) Int. Cl.³: **C 08 L 23/16**
// (C08L23/16, 23/22, 23/28)

(30) Priorität: **18.09.81 DE 3137187**

(43) Veröffentlichungstag der Anmeldung: **30.03.83**
**Patentblatt 83/13**

(84) Benannte Vertragsstaaten: **AT BE CH DE FR GB LI NL**

(71) Anmelder: **METZELER KAUTSCHUK GMBH, Gneisenaustrasse 15, D-8000 München 50 (DE)**

(72) Erfinder: **Petzold, Heinz, Finkenweg 27, D-8752 Mömbris (DE)**

(74) Vertreter: **Michelis, Theodor, Dipl.-Ing., Gneisenaustrasse 15, D-8000 München 50 (DE)**

(54) **Vulkanisierbares Elastomer.**

(57) Ein vulkanisierbares Elastomer, das insbesondere für die korrosionsfeste Auskleidung von Wänden eingesetzt werden kann, enthält EPDM sowie Butylkautschuk und/oder halogenierten Butylkautschuk. Dieses Gemisch wird durch Peroxid vernetzt.

EP 0 075 108 A2

0075108

METZTELER KAUTSCHUK GmbH
München

München, den 1.9.1982
MK 232 P 81 EP

## Vulkanisierbares Elastomer

Die Erfindung betrifft ein vulkanisierbares Elastomer für die korrosionsfeste Auskleidung von Wänden.

Für die Auskleidung von Behältern, Wannen, Rohren, Rührkesseln und anderen Aggregaten werden zum Zwecke des Korrosionsschutzes im allgemeinen Folienbahnen, aber auch extrudierte Schläuche aus Elastomeren eingesetzt. Dabei werden nicht nur Behälter aus Eisen oder Stahl, sondern auch Behälter aus Beton oder Stahlbeton sowie Kunststoff-Behälter mit solchen Schutzschichten versehen.

Für die Aufbringung der Schutzschichten werden zwei verschiedene Verfahren verwendet. Bei dem ersten Verfahren werden die aus Stahl bestehenden Flächen mit unvulkanisierten Folienbahnen belegt und in einem Autoklaven unter Druck erwärmt, wodurch die Folienbahn ausvulkanisiert. Bei dem zweiten Verfahren, das insbesondere bei Betonwänden eingesetzt wird, wird eine schon vulkanisierte Folienbahn auf die Fläche aufgeklebt.

Für beide Verfahren ist wesentlich, daß die zu verlegende Folienbahn eine Dicke im Bereich von 1,5 bis 6 mm haben und sich der Form der Wand anpassen sollte. Die Folienbahnen müssen deshalb flexibel und geschmeidig

0075108

sein, beim Falzen nicht brechen und auch um Ecken und Kanten der Wand gelegt werden können. Diese Anforderungen werden besonders gut durch unvulkanisierte Folienbahnen erfüllt.

Als Maßstäbe gelten deshalb im allgemeinen die Viskosität oder Plastizität, die durch unvulkanisierte Elastomere oder Gemische von Elastomeren erreicht werden können.

Als besonders geeignetes Material hat sich Hartgummi auf der Basis von Naturkautschuk bewährt. Deshalb werden auch andere Elastomere, die manchmal eingesetzt werden, in der Regel mit Naturkautschuk verschnitten.

Im Vergleich mit Naturkautschuk sind synthetische Elastomere weniger klebefreudig und haben eine trockene Konsistenz. Diese trockenen Synthesekautschuke erreichen erst durch Zusatz hoher Anteile von Weichmacherölen vergleichbare Verlegeeigenschaften. Solche Ölanteile setzen jedoch das Beständigkeitsverhalten des Elastomers stark herab, so daß angestrebt wird, mit Elastomermischungen zu arbeiten, die praktisch kein Öl enthalten.

Die bekannten Elastomermischungen auf der Basis von Naturkautschuk erreichen eine ausreichende Beständigkeit gegenüber den wesentlichen , industriell wichtigen Chemikalien. Eine Sonderstellung nehmen jedoch oxidierend wirkende Chemikalien ein, die organische Schutzschichten rasch zerstören. Zu solchen Chemikalien gehören beispielsweise die in . Beizereien und Galvanikbetrieben verwendeten Chromsäure/Schwefelsäure-Gemischen mit Temperaturen von mehr als $60^{\circ}C$, die eine extrem hohe Aggressivität haben.

0075108

Entsprechendes gilt auch für das Entkeimungsmittel Ozon, das in zunehmendem Maße in Trinkwasser-Aufbereitungsanlagen und Schwimmbädern eingesetzt wird.

Die völlige Entkeimung wird jedoch erst bei hohen Ozon-Konzentrationen erreicht; mit diesen hohen Ozon-Konzentrationen kann jedoch derzeit noch nicht gearbeitet werden, weil die bisher üblichen Schutzschichten, insbesondere auf der Basis von Naturkautschuk, nur eine begrenzte Lebensdauer haben. Diese Haltbarkeitsdauer liegt bei den vertretbaren Ozon-Gehalten derzeit bei maximal 1 Jahr und sinkt an den Stellen, an denen das Wasser mit hoher Ozonkonzentration in den Behälter eingeleitet wird, auf weniger als 1/2 Jahr.

In der Praxis heißt dies also, daß solche Schutzfolien im Extremfall nach 6 Monaten ausgetauscht werden müssen. Dies stellt einen wesentlichen Grund dafür dar, daß Ozon nicht in dem gewünschten Maße für die Entkeimung von Trinkwasser und Schwimmbädern eingesetzt werden kann.

Der Erfindung liegt deshalb die Aufgabe zugrunde, ein vulkanisierbares Elastomer für die korrosionsfeste Auskleidung von Wänden zu schaffen, bei dem die oben erwähnten Nachteile nicht auftreten.

Insbesondere soll ein Elastomer vorgeschlagen werden, das auch gegenüber stark korrosiven Substanzen eine lange Haltbarkeit hat.

Dies wird erfindungsgemäß durch die im kennzeichnenden Teil des Anspruchs 1 angegebenen Merkmale erreicht.

Zweckmäßige Ausführungsformen sind in den Unteransprüchen zusammengestellt.

Die mit der Erfindung erzielten Vorteile beruhen auf folgenden Überlegungen: Die unter der Bezeichnung "EPDM" bekannten Olefin-Polymerisate, die einen niedrigen Gehalt einer Dien-Komponente einpolymerisiert enthalten, haben eine hohe Beständigkeit gegenüber stark oxidierenden Chemikalien, wie beispielsweise Chromsäure/Schwefelsäure-Gemische oder Ozon. Dies ist auf die paraffinischen Eigenschaften dieser Elastomere zurückzuführen, so daß sie diesen aggressiven Materialien auch bei höheren Temperaturen über längere Zeiträume widerstehen.

Andererseits sind jedoch diese Elastomere relativ trocken, so daß sie nicht in Form für die Verlegung brauchbarer Folien hergestellt werden können. Würde man beispielsweise einen solchen trockenen EPDM-Kautschuk kalandieren oder extrudieren, so würde er zu trockenen Brocken zerfallen.

Der sonst übliche Zusatz von Öl zu EPDM ist für die hier interessierenden Anwendungsfälle nicht möglich, weil dieses Öl sich nicht geschmacksneutral verhält und bei der Einwirkung von Chemikalienlösungen extrahiert werden kann.

Es hat sich nun herausgestellt, daß die gute Beständigkeit von EPDM beibehalten und gleichzeitig die Verarbeitbarkeit zu Folien oder Schläuchen für die Auskleidung von Wänden verbessert werden kann, wenn EPDM-Kautschuk mit Butylkautschuk und/oder halogeniertem Butylkautschuk verschnitten und dieser Verschnitt mit Peroxiden vulkanisiert wird.

Es ist bekannt, daß Mischungen aus EPDM und (halogeniertem) Butylkautschuk mit Schwefel vernetzt werden können. Die dabei auftretenden Schwefelbindungen werden jedoch durch oxidierend wirkende Stoffe, beispielsweise Ozon, sehr rasch angegriffen, so daß diese Vernetzung für Materialien für die Auskleidung von Behältern, die mit oxidierend wirkenden Chemikalienlösungen beschickt werden sollen, nicht geeignet sind.

Es hat sich nun herausgestellt, daß Peroxide die Covulkanisation von EPDM mit Butylkautschuk bewirken, wobei die für die Schwefel-Vulkanisation üblichen Chemikalien entfallen, beispielsweise Beschleuniger, Vulkanisationsaktivatoren, insbesondere Zinkoxid, die aufgrund der Lebensmittel-Gesetze und anderer, für Trinkwasser geltender Vorschriften nicht oder nur in begrenzten Mengen eingesetzt werden können.

Außerdem enthält dieses vulkanisierbare Elastomer keine quellend wirkenden und/oder extrahierbaren Zusätze, die dazu führen, daß die Auskleidung unter der Einwirkung von Säuren aufquillt und damit relativ rasch zerstört wird.

Eine weitere wesentliche Eigenschaft dieses vulkanisierbaren Elastomers liegt darin, daß es sowohl extrudiert als auch kalandriert werden kann, also in den hier interessierenden Verarbeitungsformen zur Verfügung steht. Dieses Material ist so elastisch, daß es ohne Schwierigkeiten auch um Ecken und Kanten verlegt werden kann, sich also der Form der Wand ohne Probleme anpaßt.

Die Erfindung wird im folgenden anhand eines Ausführungsbeispiels näher erläutert.

0075108

Ein vulkanisierbares Elastomer für die korrosionsfeste Auskleidung von Wänden enthält die folgenden Bestandteile:

50 Gew.-Teile ungesättigter Ethylen-Propylen-Kautschuk, der als Ter-Komponente Diene enthält (EPDM),
50 Gew.-Teile Chlor-Butylkautschuk,
80 Gew.-Teile elektrisch nicht leitenden,inaktiven Ruß,
50 Gew.-Teile Peroxid, und
0,3 Gew.-Teile Stabilisator.

Diese Elastomer-Ausgangsmischung ist frei von extrahierbaren oder auswaschbaren Stoffen und führt nach der Vernetzung zu einem Vulkanisat mit den folgenden physikalischen Eigenschaften:

Härte nach Shore A   =   59
Rückprallelastizität = 33 %
Reißfestigkeit      =      $7,5 \text{ N/mm}^2$
Modul 100%          =      $2,0 \text{ N/mm}^2$
Bruchdehnung        =      250 %

Aus diesen Werten kann man schließen, daß dem Vulkanisationsverbund eine Co-Vulkanisation der verwendeten Elastomere zugrundeliegt.

Mit diesem Vulkanisat wurden verschiedene Untersuchungen durchgeführt:
Das Vulkanisat wurde 1000 Stunden bei $130^{\circ}$C in destilliertem Wasser aufbewahrt; es zeigte keine Quellung. Auch bei der Prüfung des Vulkanisates in Wasser mit höchster Ozon-Konzentration machte sich keine Veränderung bemerkbar.

**0075108**

Auch die Lagerung des Vulkanisates in Chrombadlösungen mit besonders hoher Aggressivität, nämlich Chromsäure/ Schwefelsäure-Gemischen unter dem Einfluß von hohen elektrischen Feldspannungen, zeigte keine nachteilige Veränderung.

Diese vulkanisierbare Elastomermasse ließ sich ohne Schwierigkeiten durch Extrudieren und Kalandrieren auf die jeweils gewünschte Form bringen, beispielsweise zu einer Folienbahn oder zu einem Schlauch verformen, und wie üblich verarbeiten.

Wenn keine hohen Anforderungen an die Geschmacksneutralität des Elastomers gestellt werden, können der Mischung auch kleine Anteile Öl als Verarbeitungshilfe zugesetzt werden.

Diese Mischungen lassen sich nach den in der Gummiindustrie üblichen Verfahren zur Herstellung chemisch beständiger Vulkanisat-Teile einsetzen, wie Dichtungen, Schläuche, Profile, Platten, Gummi/Metall-Teile oder Membranen.

0075108

MK 232 P 81 EP

Patentansprüche

1. Vulkanisierbares Elastomer auf der Basis von EPDM, insbesondere für die korrosionsfeste Auskleidung von Wänden, g e k e n n z e i c h n e t  d u r c h einen Zusatz von Butylkautschuk und/oder halogeniertem Butylkautschuk und durch Peroxid als Vernetzer.

2. Vulkanisierbares Elastomer nach Anspruch 1, gekennzeichnet durch 30 bis 70 Teile EPDM, durch 30 bis 70 Teile Butylkautschuk und/oder halogeniertem Butylkautschuk und durch 2 bis 8 Teile Peroxid.

3. Vulkanisierbares Elastomer nach einem der Ansprüche 1 oder 2, gekennzeichnet durch 60 bis 100 Teile inaktiven, nicht-leitenden Ruß.

4. Vulkanisierbares Elastomer nach mindestens einem der Ansprüche 1 bis 3, dadurch gekennzeichnet, daß das Elastomer zu einer Folienbahn kalandiert wird.

5. Vulkanisierbares Elastomer nach mindestens einem der Ansprüche 1 bis 3, dadurch gekennzeichnet, daß das Elastomer zu einem Schlauch für die Auskleidung von Rohren extrudiert wird.